(19) Europäisches Patentamt
European Patent Office
Office européen des brevets

(11) **EP 1 059 557 A1**

(12) **EUROPEAN PATENT APPLICATION**
published in accordance with Art. 158(3) EPC

(43) Date of publication:
**13.12.2000 Bulletin 2000/50**

(51) Int. Cl.[7]: **G02F 1/1335**

(21) Application number: **99959893.1**

(86) International application number:
**PCT/JP99/07118**

(22) Date of filing: **17.12.1999**

(87) International publication number:
**WO 00/36460 (22.06.2000 Gazette 2000/25)**

(84) Designated Contracting States:
**AT BE CH CY DE DK ES FI FR GB GR IE IT LI LU MC NL PT SE**

(30) Priority: **17.12.1998 JP 35859398**

(71) Applicant:
**Citizen Watch Co., Ltd.
Tokyo 163-0428 (JP)**

(72) Inventor:
**ARAI, Makoto,
Citizen Watch Co., Ltd. Tech. Lab.
Tokorozawa-shi, Saitama 359-8511 (JP)**

(74) Representative:
**Prüfer, Lutz H., Dipl.-Phys. et al
PRÜFER & PARTNER,
Patentanwälte,
Harthauser Strasse 25d
81545 München (DE)**

(54) **LIQUID-CRYSTAL DISPLAY**

(57)     An STN liquid crystal cell (20) holding nematic liquid crystal (6), which is aligned at a twist angle of 180° to 270°, between a transparent first substrate (1) and a transparent second substrate (2) having electrodes (3, 4) on the respective opposing inner faces, is provided, a reflection-type polarizing film (14) is placed outside the first substrate (1) with a first retardation film (12) therebetween and further a backlight is provided outside the reflection-type polarizing film (14), and an absorption-type polarizing film (11) is placed outside the second substrate (2) of the STN liquid crystal cell (20) with a second retardation film (13) therebetween. Thereby, an achromatic metallic display with high brightness and high contrast can be realized.

FIG. 1

EP 1 059 557 A1

**Description**

TECHNICAL FIELD

This invention relates to a structure of a liquid crystal display device for displaying character information and image information using a super twisted nematic (STN) liquid crystal cell.

BACKGROUND TECHNOLOGY

A liquid crystal display device for displaying character information and image information using a liquid crystal cell is used in various electronic devices from small-sized devices such as a timepiece and a portable telephone to large-sized displays for screens of a television, a personal computer, and the like.

When character information and image information are displayed using a liquid crystal cell, a liquid crystal display panel, in which absorption-type polarizing films are disposed on both sides of the liquid crystal cell with a liquid crystal filled between two transparent substrates in such a manner that respective transmission axes thereof make a desired angle, is used.

When an electric field is applied to the liquid crystal of this liquid crystal display panel, an alignment direction of the liquid crystal having permittivity anisotropy changes, which causes a change in an optical characteristic. Through the use of the optical anisotropy of the liquid crystal, a desired display is performed.

As such of a conventional liquid crystal display device using the optical characteristic of the liquid crystal, there is a typical one using a twisted nematic (TN) liquid crystal. Further, when a polarizing direction of a linearly polarized light which has passed through the absorption-type polarizing film on the incident side is controlled by an optical rotation of the TN liquid crystal, and when the absorption-type polarizing film on the emitting-out- side is disposed to obtain a normally-white mode, character information and image information are indicated in a black display on white that is the background color.

However, in a display of character information and image information in black against the white background as described above, neither variation in design nor interest can be offered.

Therefore, a liquid crystal display device capable of providing variation in display of character information and image information and additionally variation in design is desired.

Moreover, in order to increase the amount of information capable of displaying character information and image information, it is necessary to use not a liquid crystal display device using the TN liquid crystal but a liquid crystal display device using a super twisted nematic (STN) liquid crystal cell. The liquid crystal display device using the STN liquid crystal cell has highly sharp responsivity in transmittance change in response to a change in applied voltage and a large margin in voltage change can be obtained, thereby enabling a high-split display, resulting in increased pixel density within a display screen. Accordingly, a display capacity can be increased and contrast between a display portion and a background portion is also excellent.

Since this STN-type liquid crystal display device has a display mode using a birefringence anisotropy of a liquid crystal, even if using a normally-white mode which is excellent in brightness for a monochrome display, a display color of the background portion at which voltage is not applied to the liquid crystal layer is colored due to an elliptically polarized light.

Consequently, the display color of the background is not white but a color close to yellowish green, and the display color of the black display portion at which voltage is applied to the liquid crystal layer is bluish black.

Even such an STN liquid crystal display device provides a plain information display with little charm in design.

This invention is made in view of such a present state, and its object is to bring a background for a display to an achromatic color without coloring in an STN-type liquid crystal display device having a large display capacity for information and to make a liquid crystal display device which is new in design and fashionable.

DISCLOSURE OF THE INVENTION

In order to achieve the above object, a liquid crystal display device according to this invention comprises: an STN liquid crystal cell formed by holding nematic liquid crystal, which is aligned at a twist angle of 180° to 270°, between a transparent first substrate and a transparent second substrate having electrodes on respective opposing inner faces; a reflection-type polarizing film provided outside the first substrate of the STN liquid crystal cell; a first retardation film provided between the reflection-type polarizing film and the first substrate; a backlight provided on the opposite side of the reflection-type polarizing film to the first retardation film; an absorption-type polarizing film provided outside the second substrate of the STN liquid crystal cell; and a second retardation film provided between the absorption-type polarizing film and the second substrate.

In this case it is preferable that the first and second retardation films are retardation films each of which satisfies conditions of $nx > nz > ny$ of the retardation film, where $nx$ is the refractive index in a stretching direction of the retardation film, $ny$ is the refractive index in a direction orthogonal to the stretching direction, and $nz$ is the refractive index in a thickness direction.

Further, it is suitable to dispose a twisted retardation film in place of the aforesaid second retardation film and omit the aforesaid first retardation film to thereby form a liquid crystal display device.

In this case, it is desirable that a value of a difference $\Delta T = Ts - Tc$ in absolute value of both the twist angles ranges from 0° to 30°, where Ts is a twist angle of the STN liquid crystal cell and Tc is a twist angle of the twisted retardation film.

In these liquid crystal display devices, it is preferable that the absorption-type polarizing film and the reflection-type polarizing film are arranged in such a manner that respective transmission axes are orthogonal to each other.

Moreover, it is suitable that a non-reflection layer is provided on the opposite side of the absorption-type polarizing film to the second retardation film or the twisted retardation film.

Furthermore, it is preferable that the thickness of the above-described first substrate of the STN liquid crystal cell is 0.1 mm to 0.5 mm.

In the liquid crystal display device according to this invention structure as above, a background portion that is a no-voltage-applied portion is brought to a metallic display.

Further, it is preferable that an amount of light reflected by the reflection-type polarizing film is increased as much as possible so as to bring the no-voltage-applied portion to a bright achromatic metallic display, and that the STN liquid crystal cell is optimized so as to increase the transmittance of a voltage-applied portion within a wide range of wavelength.

More specifically, a difference between a retardation value Rf of the retardation film and $Rs = \Delta nd$ which is a product of a birefringency $\Delta n$ of the liquid crystal and a cell gap d, that is a value of $\Delta R = Rs - Rf$, is set to be 0.005 $\mu$m to 0.05 $\mu$m, and the absorption-type polarizing film and the reflection-type polarizing film are arranged so that respective transmission axes are orthogonal to each other, whereby the reflection efficiency of the STN liquid crystal cell is increased, resulting in a further excellent transmission state.

Further, a so-called Z-type retardation film, not an ordinary uniaxial-stretching-type, satisfying conditions of nx > nz > ny, where nx is the refractive index in a stretching direction, ny is the refractive index in a direction orthogonal to the stretching direction, and nz is the refractive index in a thickness direction is used for the retardation film, whereby the viewing angle characteristic is improved and incident light from the surroundings is effectively utilized, and thus a brighter display can be obtained.

Furthermore, even if the twisted retardation film is used in place of the retardation film, a metallic tone characteristic with high reflectance and an excellent transmission characteristic can be obtained and the visibility is improved within a wide viewing angle, so that a liquid crystal display in a bright achromatic metallic display can be realized.

BRIEF DESCRIPTION OF DRAWINGS

FIG. 1 and FIG. 2 are schematic sectional views showing the structure of a first embodiment of a liquid crystal display device according to the invention;
FIG. 3 and FIG. 4 are plane views for explaining positional relations between respective components of the liquid crystal display device of the same;
FIG. 5 and FIG. 6 are schematic sectional views showing the structure of a second embodiment of a liquid crystal display device according to the invention; and
FIG. 7 and FIG. 8 are plane views for explaining positional relations between respective components of the liquid crystal display device of the same.

BEST MODE FOR CARRYING OUT THE INVENTION

In order to explain the invention in more detail, embodiments of this invention will be concretely described hereinafter with reference to the drawings.

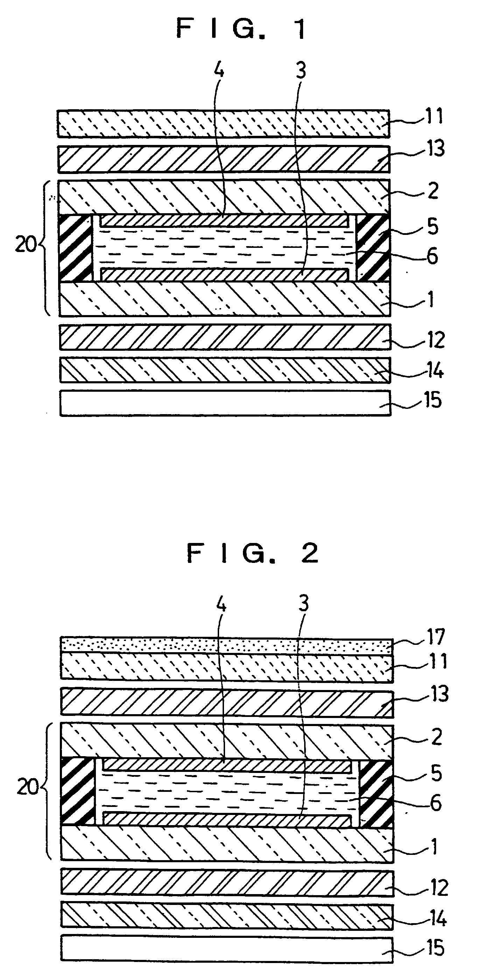

First Embodiment: FIG. 1 to FIG. 4

At the beginning, the first embodiment of a liquid crystal display device according to the invention will be explained with reference to FIG. 1 to FIG. 4.

FIG. 1 and FIG. 2 are schematic sectional views for explaining components of the liquid crystal display device, which is shown with a ratio of a dimension in a direction of thickness being substantially enlarged.

The liquid crystal display device of the first embodiment is a transflective liquid crystal display device, in which a first substrate 1 and a second substrate 2, each of which is made of a glass plate with a thickness of 0.5 mm, are bonded together with a sealant 5 with a fixed gap therebetween, and nematic liquid crystal 6 which is aligned at a twist angle of 225° is sealed and sandwiched in the gap, thereby forming an STN liquid crystal cell 20 as shown in FIG. 1 and FIG. 2.

On the inner surface (a face on the liquid crystal 6 side) of the first substrate 1, first electrodes 3 made of indium tin oxide (ITO), which is transparent conductive film, are formed, and also on the inner surface of the second substrate 2, second electrodes 4 made of ITO are formed.

Outside (the lower side in the drawing) the first substrate 1 of the STN liquid crystal cell 20, a reflection-type polarizing film 14 is disposed with a first retardation film 12 with a retardation value R = 0.43 $\mu$m therebetween, and a backlight 15 is disposed on the opposite side (the lower side) of the reflection-type polarizing film 14 to the retardation film 12.

For the backlight 15, an electro-luminescent (EL) device, a light emitting diode (LED), a cold-cathode tube, a hot-cathode tube, or the like can be used. Further, it is preferable to apply pigments of a fluorescent color to a light-emitting face of the backlight 15 by printing to thereby generate a fluorescent color.

Moreover, on the outside (the upper side in the drawing) of the second substrate 2 of the STN liquid crystal cell 20, an absorption-type polarizing film 11 with a transmittance of 46% is disposed with a second retardation film 13 with a retardation value R = 0.43 μm therebetween, thereby setting Rf, which is the sum of the retardation values of the first retardation film 12 and the second retardation film 13, at 0.86 μm.

In FIG. 1 and FIG. 2, the upper side is the visible side by an observer and an external light falls from the upper side.

Here, the ordinary absorption-type polarizing film 11 is a member in a sheet form which has a transmission axis and an absorption axis which are orthogonal to each other, transmits a linearly polarized light polarized in the direction parallel to the transmission axis, and absorbs a linearly polarized light polarized in the direction parallel to the absorption axis.

On the other hand, the reflection-type polarizing film 14 is a member in a sheet form which has a transmission axis and a reflection axis which are orthogonal to each other, transmits a linearly polarized light polarized in the direction parallel to the transmission axis, and reflects a linearly polarized light polarized in the direction parallel to the reflection axis.

Therefore, the arrangement of the backlight 15 which generates a fluorescent color outside the reflection-type polarizing film 14 provides a display in a fluorescent color when a linearly polarized light polarized in the direction parallel to the transmission axis is incident, and when a linearly polarized light polarized in the direction parallel to the reflection axis is made incident, directly reflects the light, thereby obtaining a bright display in a metallic tone because reflection efficiency thereof is high by virtue of a surface in a mirror face state.

In this embodiment, an optical film DBEF (trade name) manufactured by Sumitomo 3M Ltd. is used as the reflection-type polarizing film 14. This reflection-type polarizing film is formed with multi-layered thin films with different refractive indices. In addition to this, a polarizing film composed of a cholesteric liquid crystal polymer sandwiched between λ/4 (quarter wavelength) films or one utilizing a hologram is applicable.

Each of the first retardation film 12 and the second retardation film 13 is a film with a thickness of about 70 μm made of stretched polycarbonate, a so-called Z-type retardation film satisfying conditions of $nx > nz > ny$, where nx is the refractive index in a stretching direction, fly is the refractive index in a direction orthogonal to the stretching direction, and nz is the refractive index in a thickness direction.

Further, the first retardation film 12 and the reflection-type polarizing film 14, and the second retardation film 13 and the absorption-type polarizing film 11 are respectively bonded together with an acrylic adhesive to be integrated.

The Z-type retardation film has little change in retardation when seen from a tilted viewing angle, and consequently the viewing angle characteristic of the liquid crystal display device can be improved.

Here, a relationship between the thickness of the first substrate 1 of the STN liquid crystal cell 20 and display quality will be explained. A light incident on the STN liquid crystal cell 20 from the front passes through the absorption-type polarizing film 11, the second retardation film 13, the second substrate 2, and the liquid crystal 6, further passes through the first substrate 1 and the first retardation film 12, and then reflected at the reflection-type polarizing film 14, passing through the same way as that of the incident light to reach the observer's side as an emitting-out light.

However, if the first substrate 1 is thick, a liquid crystal layer which an incident in a slanting direction has passed through when it is incident, differs from a liquid crystal layer which the light passes through when it is emitted out, whereby a double image in which a display portion appears blurry occurs, resulting in a decrease in display quality.

Accordingly, the thinner the first substrate 1 is, the more the double image by the incident light in the slanting direction decreases, resulting in an increase in visibility of display.

When the first substrate 1 was prototyped using substrates having various thicknesses, an excellent display quality was obtained in a case of a thickness of 0.5 mm or less. The thinner the first substrate 1 is, the better, however, the workability deteriorates if the first substrate 1 is too thin, therefore it is preferable to have a thickness of 0.1 mm or more. In this embodiment, a glass plate having a thickness of 0.5 mm is used as both the first substrate 1 and the second substrate 2. It is preferable, however, to thin the first substrate in thickness within 0.1 mm to 0.5 mm.

The transmittances of the first electrodes 3 and the second electrodes 4 made of ITO are important in terms of brightness and color tone, and thus ITO with high transmittance is required. Generally, as for the ITO electrodes, the lower the sheet resistance value is, the thicker the film thickness of ITO becomes and the lower the transmittance becomes.

Thus, since the first electrodes 3 are applied a data signal, which is low in voltage, and thus have little influence due to cross-talk, ITO film with a thickness of 40 nm having a sheet resistance of 100 ohms can be used for them. The average transmittance of the first electrodes in that case is about 92%.

Since the second electrodes 4 are applied a scanning signal which is high in voltage, ITO film with a thickness of 230 nm having a sheet resistance of 10 ohms is used for them in order to reduce cross-talk, and thus the average transmittance lowers to about 89%, but the brightness can be improved by employing transparent electrodes having a transmittance of 90% or more at least for the electrodes on one substrate as in this embodiment.

In the liquid crystal display device shown in FIG. 2, a non-reflection layer 17 is provided on the surface of the opposite side (the visible side) of the absorption-type polarizing film 11 to the second retardation film 13. The non-reflection layer 17 is made by evaporation of inorganic thin film in several layers and a reflectance thereof is about 0.5%.

The provision of the non-reflection layer 17 causes a reduction of the surface reflection by the absorption-type polarizing film 11, so that the transmittance is improved, resulting in a bright display. Moreover, the emitting-out light to the observer's side is scattered by the non-reflection layer 17, so that a soft color tone in a bright achromatic metallic tone can be obtained.

However, since evaporation film is costly, a coating-type non-reflection film in which one to two layers of an organic material are applied has been developed recently and has a reflectance of about 1%, which is a little high, but it is low cost. Such a non-reflection film can also be used as the non-reflection layer 17 in this embodiment.

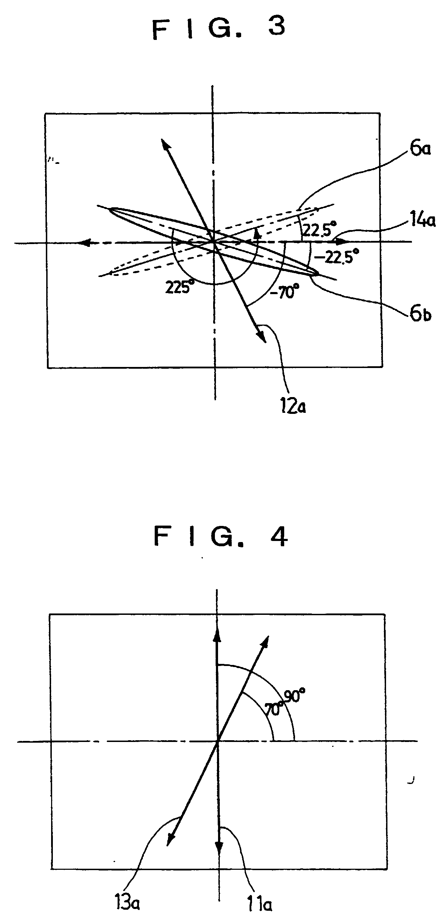

Next, the positional relations between components in the first embodiment will be described using FIG. 3 and FIG. 4. On the surfaces of the first electrodes 3 and the second electrodes 4, alignment layers (not shown) are respectively formed. As shown in FIG. 3, the inner face of the first substrate 1 is subjected to a rubbing treatment at a 22.5° angle in a counterclockwise direction with respect to a horizontal axis, whereby a lower molecular alignment direction 6a of the liquid crystal 6 is disposed at a +22.5° angle ("+" represents a counterclockwise direction).

The inner face of the second substrate 2 is subjected to a rubbing treatment at a 22.5° angle in a clockwise direction with respect to the horizontal axis, whereby an upper molecular alignment direction 6b of the liquid crystal 6 is disposed at a -22.5° angle ("-" represents a clockwise direction).

Further, a so-called "chiral" substance which is an optical rotatory material is added to the nematic liquid crystal 6 having a viscosity of 20cp, and the twisting pitch P thereof is adjusted to 11 μm, thus forming the STN liquid crystal cell 20 twisted at a 225° angle in a counterclockwise direction.

A difference Δn in birefringence of the nematic liquid crystal 6 in use is set to be 0.15 and a cell gap d which is a gap between the first substrate 1 and the second substrate 2 is set to be 5.8 μm.

Accordingly, a Δnd value of the STN liquid crystal cell 20, represented by the product of the difference Δn in the birefringence of the nematic liquid crystal 6 and the cell gap d, is Rs, Rs = 0.87 μm. The sum of retardation values of the first retardation film 12 and the second retardation film 13 is Rf, Rf = 0.86μm, and thus ΔR = Rs - Rf = 0.01.

A transmission axis 14a of the reflection-type polarizing film 14 is directed at a 0° angle with respect to a horizontal axis, a transmission axis 11a of the absorption-type polarizing film 11 is directed at a +90° angle with respect to a horizontal axis as shown in FIG. 4, a stretching axis 12a of the first retardation film 12 is directed at a -70° angle with respect to the horizontal axis as shown in FIG. 3, and a stretching axis 13a of the second retardation film 13 is directed at a +70° angle with respect to the horizontal axis as shown in FIG. 4.

In the liquid crystal display device of the first embodiment structured as above, in a state where no voltage is applied between the first and second electrodes 3 and 4 of the liquid crystal cell 20, a linearly polarized light reaches the reflection-type polarizing film 14 is all reflected by the reflection-type polarizing film 14 and returned to the visible side, resulting in a bright achromatic, display in a metallic tone like a mirror face. Applying voltage between the first electrodes 3 and the second electrodes 4, molecules of the nematic liquid crystal 6 rise and the optical rotation is lost, and thus the linearly polarized light reaches the reflection-type polarizing film 14 passes through it, so that a display color by the color on the surface can be viewed when the backlight 15 is not turned on. When the backlight is turned on, the display color by a luminescent color of the backlight 15 can be viewed.

Therefore, the color on the surface and the luminescent color of the backlight 15 are optionally selected, thereby displaying information in an optional color in a background of a metallic achromatic color, or in contrast to that, displaying information in a metallic achromatic color in a background of an optional color can be realized.

Moreover, the Z-type retardation films satisfying conditions of nx > nz > ny are used as the first retardation film 12 and the second retardation film 13, thereby improving the viewing angle characteristic. The improvement of the viewing angle characteristic allows light to fall from in various directions, and consequently, the metallic display becomes bright and a liquid crystal display device which is more excellent in visibility can be obtained.

In the aforesaid embodiment, the STN liquid crystal cell 20 with Rs = 0.87 μm at a twist angle of 225° is used as an STN liquid crystal cell. However, even if an STN liquid crystal cell with Rs = 0.7 to 1.0 at a twist angle of 180° to 270° is used, the similar metallic display can be obtained by optimizing arrangement angles of the absorption-type polarizing film 11, the first retardation film 12, the second retardation film 13, and the reflection-type polarizing film 14.

Furthermore, though the absorption-type polarizing film 11 with a transmittance of 46% is used in this embodiment, it is preferable to use a polarizing film with a transmittance of 45% or more and a polarization degree of 95% or more in order to obtain excellent brightness. It is, of course, possible to use even an absorption-type polarizing film with a transmittance of less than 45%, though the display becomes somewhat dark.

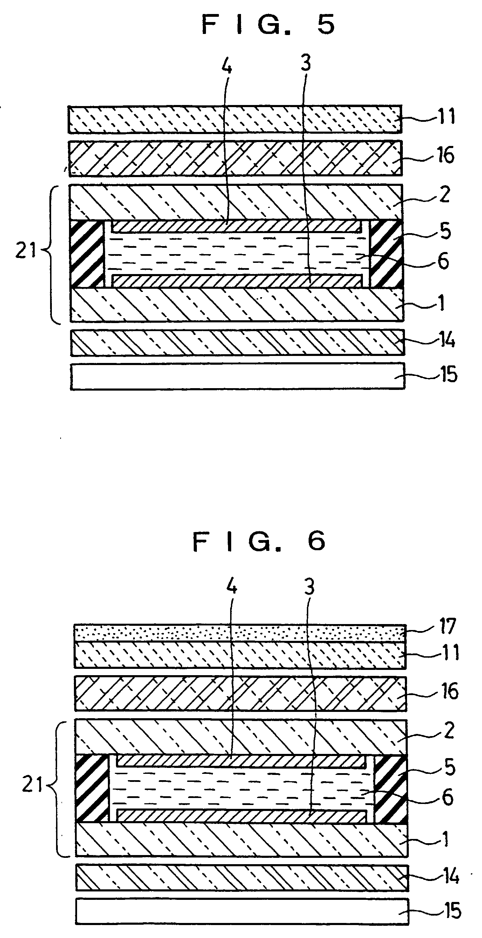

Second Embodiment: FIG. 5 to FIG. 8

Next, the second embodiment of the liquid crystal display device according to the invention will be described with reference to FIG. 5 to FIG. 8.

FIG. 5 and FIG. 6 are schematic sectional views for explaining components of the liquid crystal display device, the same numerals are given to portions corresponding to those in FIG. 1 and FIG. 2, and the description thereof is omitted or simplified.

The liquid crystal display device of the second embodiment is also a transflective liquid crystal display device and has the same structure as that of the first embodiment except that: a twisted retardation film 16 is disposed in place of the second retardation film 13 in the liquid crystal display device of the first embodiment; the first retardation film 12 is omitted; and the twist angle of the STN liquid crystal cell 20 is different.

In the liquid crystal display device shown in FIG. 5 and FIG. 6, an STN liquid crystal cell 21 is structured similarly to the STN liquid crystal cell 20 of the first embodiment, but nematic liquid crystal 6 which is sealed and sandwiched in a gap between a first substrate 1 and a second substrate 2 is aligned at a twist angle of 240° in a counterclockwise direction.

On the outside (the lower side) of the first substrate 1 of the STN liquid crystal cell 21, a reflection-type polarizing film 14 is disposed, and a backlight 15 is disposed outside the reflection-type polarizing film 14.

On the outside (the upper side) of the second substrate 2, an absorption-type polarizing film 11 with a transmittance of 46% is disposed with the twisted retardation film 16 therebetween.

In the liquid crystal display device shown in FIG. 6, the same non-reflection layer 17 as that shown in FIG. 2 is provided on the surface of the opposite side of the absorption-type polarizing film 11 to the twisted retardation film 16.

The reflection-type polarizing film 14 is the same as that used in the first embodiment.

Moreover, the first substrate 1, the second substrate 2, first electrodes 3, and second electrodes 4 are the same as those used in the first embodiment, respectively.

The twisted retardation film 16 is a film that a liquid crystal polymer material having a twist is applied to triacetyl cellulose (TAC) film or polyethylene terephthalate (PET) film after an aligning treatment, brought into a liquid crystal state at a high temperature of about 150°C, and rapidly cooled to room temperature after adjusting the twist angle to fix the twisted state.

A clockwise twisted retardation film 16 having a twist angle Tc = -240° and Rc, which is a $\Delta$nd value, of 0.80 $\mu$m is used as the twisted retardation film 16 in this embodiment.

As shown in FIG. 6, the non-reflection layer 17 made by evaporation of inorganic thin film in several layers and having a reflectance of about 0.5% is provided on the surface of the absorption-type polarizing film 11, whereby the surface reflection by the absorption-type polarizing film 11 is reduced so that the transmittance is improved, resulting in a bright display. Moreover, the emitting-out light to the visible side is scattered by the non-reflection layer 17, so that a soft color in a bright achromatic metallic tone can be obtained.

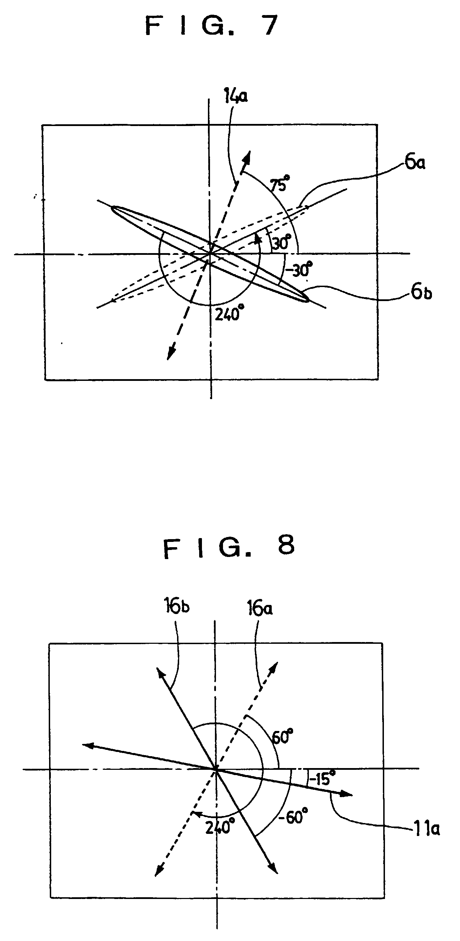

Next, the positional relations between components of this liquid crystal display device will be described using FIG. 7 and FIG. 8.

On the surfaces of the first electrodes 3 and the second electrodes 4, alignment layers (not shown) are respectively formed. As shown in FIG. 7, the inner face of the first substrate 1 is subjected to a rubbing treatment at a 30° angle in a clockwise direction with respect to a horizontal axis, whereby a lower molecular alignment direction 6a of the liquid crystal 6 is disposed at a +30° angle. The inner face of the second substrate 2 is subjected to a rubbing treatment at a 30° angle in a counterclockwise direction with respect to the horizontal axis, whereby an upper molecular alignment direction 6b of the liquid crystal 6 is disposed at a -30° angle.

A so-called "chiral" substance, which is an optical rotatory material, is added to the nematic liquid crystal 6 having a viscosity of 20cp and the twisting pitch P thereof is adjusted to 11 $\mu$m, thus forming the STN liquid crystal cell 21 twisted at a left-handed 240° angle.

A difference $\Delta$n in birefringence of the nematic liquid crystal 6 in use is set to be 0.15 and a cell gap d which is a gap between the first substrate 1 and the second substrate 2 is set to be 5.4 $\mu$m. Accordingly, Rs, which is a $\Delta$nd value of the STN liquid crystal cell 21, represented by the product of the difference $\Delta$n in the birefringence of the nematic liquid crystal 6 and the cell gap d, is Rs=0.81 $\mu$m. The retardation value Rc of the twisted retardation film is Rc=0.80 $\mu$m, and thus $\Delta$R = Rs - Rc = 0.01 $\mu$m.

When the $\Delta$R increases, the metallic display is colored and gradually turns yellow, and conversely when the $\Delta$R becomes extremely small, transmitted light is reduced, whereby the entire display becomes dark. Accordingly, a range of $\Delta$R = 0.005 $\mu$m to 0.05 $\mu$m is preferable.

A transmission axis 14a of the reflection-type polarizing film 14 is directed at a +75° angle with respect to a horizontal axis as shown in FIG. 7, a transmission axis 11a of the absorption-type polarizing film 11 is directed at a -15° angle with respect to a horizontal axis as shown in FIG. 8. Further, a lower molecular alignment direction 16a of the twisted retardation film 16 is directed at a +60° angle with respect to the horizontal axis, and an upper molecular alignment direction 16b thereof is directed at a -60° angle, resulting in a twisted state of Tc = 240° in a clockwise direction.

In the liquid crystal display device of the second embodiment structured as above, in a state where no voltage is applied between the first and second electrodes 3, 4 of the liquid crystal cell 21, a linearly polarized light which reaches the reflection-type polarizing film 14 is all reflected by the reflection-type polarizing film 14 and returned to the visible side, resulting in a bright achromatic display in a metallic tone like a mirror face. Applying voltage between the first electrodes 3 and the second electrodes 4, molecules of the nematic liquid crystal 6 rise and the optical rotation is lost, and thus the linearly polarized light which reaches the reflection-type polarizing film 14 passes through it, so that a display color by the color on the surface can be viewed when the backlight 15 is not turned on. When the backlight is turned on, the display color by a luminescent color of the backlight 15 can be viewed.

Therefore, also according to this liquid crystal display device, the color on the surface and the luminescent color of the backlight 15 are optionally selected, thereby displaying information in an optional color in a background of a metallic achromatic color, or in contrast to that, displaying information in a metallic achromatic color in a background of an optional color can be realized.

Moreover, by virtue of the use of the twisted retardation film, the viewing angle characteristic is improved, and consequently the metallic display becomes bright and a liquid crystal display device which is more excellent in visibility can be obtained.

In this embodiment, the STN liquid crystal cell 21 with Rs = 0.84 μm at a twist angle of Ts = 240° is used as an STN liquid crystal cell. However, even if an STN liquid crystal cell with Rs = 0.7 μm to 1.0 μm at a twist angle of 180° to 270° is used, the similar display device can be obtained by optimizing arrangement angles of the absorption-type polarizing film 11, the twisted retardation film 16, and the reflection-type polarizing film 14.

Though the absorption-type polarizing film 11 with a transmittance of 46% is used in this embodiment, it is preferable to use a polarizing film with a transmittance of 45% or more and a polarization degree of 95% or more in order to obtain excellent brightness. It is, of course, possible to use even an absorption-type polarizing film with a transmittance of less than 45%, though the display becomes somewhat dark.

A liquid crystal polymer film, of which the twisted state is fixed at room temperature, is used as the twisted retardation film 16 in this embodiment, but if a temperature-compensation type twisted retardation film, in which part of liquid crystal molecules are only bonded together into polymer molecules in a chain state and Rc thereof varies with temperature, is used, the brightness and contrast at high temperatures can be improved, resulting in a more excellent liquid crystal display device.

In this embodiment, a glass substrate with a thickness of 0.5 mm is used for the first substrate 1, and the thinner the thickness of the first substrate 1 is, the more excellent display quality can be obtained. However, since the workability deteriorates if it is too thin, the thickness is preferable in a range from 0.1 mm to 0.5 mm in reality. Further, a plastic substrate such as polyethylene terephthalate (PET) may be used for the first and second substrates in place of the glass substrate.

INDUSTRIAL APPLICABILITY

As is clear from the above description, according to the invention, a liquid crystal display device with a large capacity for information display using an STN liquid crystal cell can be made into a transflective liquid crystal display device capable of displaying information with high brightness and high contrast in an optional color in a background of an achromatic metallic color or an inverse display thereof and which is various in design and fashionable. Moreover, this liquid crystal display device can be applied to display devices such as various kinds of electronic devices as well as a wrist watch, a cellular phone, and a personal digital assistant (PDA), and can be improved in design in appearance and fashion.

**Claims**

1. A liquid crystal display device, comprising:

an STN liquid crystal cell formed by holding nematic liquid crystal, which is aligned at a twist angle of 180° to 270°, between a transparent first substrate and a transparent second substrate having electrodes on respective opposing inner faces;
a reflection-type polarizing film provided outside said first substrate of said STN liquid crystal cell;
a first retardation film provided between the reflection-type polarizing film and said first substrate;
a backlight provided on the opposite side of the reflection-type polarizing film to the first retardation film;
an absorption-type polarizing film provided outside said second substrate of said STN liquid crystal cell; and
a second retardation film provided between the absorption-type polarizing film and said second

substitute.

2. The liquid crystal display device according to claim 1, wherein said first and second retardation films are retardation films each of which satisfies conditions of nx > nz > ny, where nx is the refractive index in a stretching direction of said retardation film, ny is the refractive index in a direction orthogonal to the stretching direction, and nz is the refractive index in a thickness direction.

3. The liquid crystal display device according to claim 1, wherein said absorption-type polarizing film and said reflection-type polarizing film are arranged in such a manner that respective transmission axes thereof are orthogonal to each other.

4. The liquid crystal display device according to claim 2, wherein said absorption-type polarizing film and said reflection-type polarizing film are arranged in such a manner that respective transmission axes thereof are orthogonal to each other.

5. The liquid crystal display device according to claim 1, wherein a non-reflection layer is provided on the opposite side of said absorption-type polarizing film to said second retardation film.

6. The liquid crystal display device according to claim 2, wherein a non-reflection layer is provided on the opposite side of said absorption-type polarizing film to said second retardation film.

7. The liquid crystal display device according to claim 1, wherein the thickness of said first substrate is 0.1 mm to 0.5 mm.

8. A liquid crystal display device, comprising:

    an STN liquid crystal cell formed by holding nematic liquid crystal, which is aligned at a twist angle of 180° to 270°, between a transparent first substrate and a transparent second substrate having electrodes on respective opposing inner faces;
    a reflection-type polarizing film provided outside said first substrate of said STN liquid crystal cell;
    a backlight provided on the opposite side of the reflection-type polarizing film to said first substrate;
    an absorption-type polarizing film provided outside said second substrate of said STN liquid crystal cell; and
    a twisted retardation film provided between the absorption-type polarizing film and said second substrate.

9. The liquid crystal display device according to claim 8, wherein a value of a difference $\Delta T = Ts - Tc$ in absolute value of both the twist angles ranges from 0° to 30°, where Ts is a twist angle of said STN liquid crystal cell and Tc is a twist angle of said twisted retardation film.

10. The liquid crystal display device according to claim 8, wherein said absorption-type polarizing film and said reflection-type polarizing film are arranged in such a manner that respective transmission axes thereof are orthogonal to each other.

11. The liquid crystal display device according to claim 9, wherein said absorption-type polarizing film and said reflection-type polarizing film are arranged in such a manner that respective transmission axes thereof are orthogonal to each other.

12. The liquid crystal display device according to claim 8, wherein a non-reflection layer is provided on the opposite side of said absorption-type polarizing film to said twisted retardation film.

13. The liquid crystal display device according to claim 9, wherein a non-reflection layer is provided on the opposite side of said absorption-type polarizing film to said twisted retardation film.

14. The liquid crystal display device according to claim 8, wherein the thickness of said first substrate is 0.1 mm to 0.5 mm.

**Claims for the following Contracting State : EP**

1. A liquid crystal display device, comprising:

    an STN liquid crystal cell (20) formed by holding nematic liquid crystal (6), which is aligned at a twist angle of 180° to 270°, between a transparent first substrate (1) and a transparent second substrate (2) having electrodes (3, 4) on respective opposing inner faces;
    a reflection-type polarizing film (14) provided outside said first substrate (1) of said STN liquid crystal cell (20);
    a first retardation film (12) provided between the reflection-type polarizing film (14) and said first substrate(1);
    a backlight (15) provided on the opposite side of the reflection-type polarizing film (14) to the first retardation film (12);
    an absorption-type polarizing film (11) provided outside said second substrate (2) of said STN liquid crystal cell (20); and
    a second retardation film (13) provided between the absorption-type polarizing film (11) and said second substrate (2).

2. The liquid crystal display device according to claim 1, wherein said first and second retardation films (12, 13) are retardation films each of which satisfies conditions of nx>nz>ny, where nx is the refractive index in a stretching direction of said retardation film, ny is the refractive index in a direction orthogonal to the stretching direction, and nz is the refractive index in a thickness direction.

3. The liquid crystal display device according to claim 1 or 2, wherein a non-reflection layer (17) is provided on the opposite side of said absorption-type polarizing film (11) to said second retardation film (13).

4. A liquid crystal display device, comprising:

an STN liquid crystal cell (21) formed by holding nematic liquid crystal (6), which is aligned at a twist angle of 180° to 270°, between a transparent first substrate (1) and a transparent second substrate (2) having electrodes on respective opposing inner faces;
a reflection-type polarizing film (14) provided outside said first substrate (1) of said STN liquid crystal cell (21);
a backlight (15) provided on the opposite side of the reflection-type polarizing film (14) to said first substrate (1);
an absorption-type polarizing film (11) provided outside said second substrate (2) of said STN liquid crystal cell (21); and
a twisted retardation film (16) provided between the absorption-type polarizing film (11) and said second substrate (2).

5. The liquid crystal display device according to claim 4, wherein a value of a difference ΔT=Ts-Tc in absolute value of both the twist angles ranges from 0° to 30°, where Ts is a twist angle of said STN liquid crystal cell (21) and Tc is a twist angle of said twisted retardation film (16).

6. The liquid crystal display device according to claim 1, 2, 4, or 5, wherein said absorption-type polarizing film (11) and said reflection-type polarizing film (14) are arranged in such a manner that respective transmission axes thereof are orthogonal to each other.

7. The liquid crystal display device according to claim 4 or 5, wherein a non-reflection layer (17) is provided on the opposite side of said absorption-type polarizing film (11) to said twisted retardation film (16).

8. The liquid crystal display device according to claim 1 or 4, wherein the thickness of said first substrate (1) is 0.1 mm to 0.5 mm.

# F I G. 1

# F I G. 2

# F I G. 3

# F I G. 4

# F I G. 5

# F I G. 6

# F I G. 7

# F I G. 8

# INTERNATIONAL SEARCH REPORT

| International application No. |
|---|
| PCT/JP99/07118 |

**A. CLASSIFICATION OF SUBJECT MATTER**
IntCl7 G02F1/1335

According to International Patent Classification (IPC) or to both national classification and IPC

**B. FIELDS SEARCHED**

Minimum documentation searched (classification system followed by classification symbols)
IntCl7 G02F1/1335

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2000 |
| Kokai Jitsuyo Shinan Koho | 1971-2000 | Jitsuyo Shinan Toroku Koho | 1996-2000 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | EP, 0862076, A1 (SEIKO EPSON CORPORATION), 02 September, 1998 (02.09.98), Full text; Figs. 1 to 26 & WO, 98/12594, A1 & JP, 10-260402, A & JP, 10-260403, A & EP, 0877282, A | 1-14 |
| Y | JP, 8-43787, A (Asahi Glass Co., Ltd.), 16 February, 1996 (16.02.96), Full text; Figs. 1 to 11 (Family: none) | 1-7 |
| Y | JP, 7-225372, A (Hitachi, Ltd.), 22 August, 1995 (22.08.95), Full text; Figs. 1 to 6 (Family: none) | 5,6,12,13 |
| Y | JP, 8-68982, A (Alps Electric Co., Ltd.), 12 March, 1996 (12.03.96), Full text; Figs. 1 to 6 (Family: none) | 8-14 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 March, 1999 (14.03.99) | 21 March, 2000 (21.03.00) |

| Name and mailing address of the ISA/ | Authorized officer |
|---|---|
| Japanese Patent Office | |
| Facsimile No. | Telephone No. |

Form PCT/ISA/210 (second sheet) (July 1992)